# NEUE EUROPÄISCHE PATENTSCHRIFT

(11) **EP 2 858 871 B2**
(45) Veröffentlichungstag und Bekanntmachung des Hinweises auf die Entscheidung über den Einspruch: **15.07.2020**
(45) Hinweis auf die Patenterteilung: 05.10.2016
(21) Anmeldenummer: 13726213.5
(22) Anmeldetag: 31.05.2013
(51) Int. Cl.: B60W 50/02, B60T 7/04, B60T 7/12, B60T 17/02, B60T 17/18, B60T 17/22, B60W 40/064, F16D 65/00

(54) **VERFAHREN ZUR SICHERSTELLUNG DER BREMSWIRKUNG EINER BREMSE**
METHOD FOR SECURING THE BRAKING EFFECT OF A BRAKE
PROCÉDÉ POUR GARANTIR L'EFFET DE FREINAGE D'UN FREIN

(30) Priorität: 06.06.2012 DE 102012209519
(43) Veröffentlichungstag der Anmeldung: 15.04.2015
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2013/061222
(87) Internationale Veröffentlichungsnummer: WO 2013/182480

(56) Entgegenhaltungen:
- EP-A1- 1 832 480
- WO-A1-02/083473
- WO-A1-2005/100114
- DE-A1- 4 024 078
- DE-A1- 4 024 078
- DE-A1- 10 111 076
- DE-A1- 10 127 273
- DE-A1- 10 257 839
- DE-A1- 10 320 175
- DE-A1- 10 322 451
- DE-A1-102008 015 288
- DE-A1-102010 001 676
- DE-C1- 19 911 902
- GB-A- 2 363 436

## Beschreibung

Die vorliegende Erfindung betrifft ein Verfahren zur Sicherstellung der Bremswirkung einer Bremse, insbesondere eines Nutzfahrzeugs, im Fahrbetrieb.

Bei Bremsen bzw. bei Bremsbelägen gibt es das Problem des sogenannten "Einschlafens" oder "Verglasens". Mit dem "Einschlafen" der Bremsbeläge bezeichnet man einen starken Reibwertabfall aufgrund einer nicht sehr häufigen Benutzung der Radbremsen. Dies kann zum Beispiel auftreten, wenn ein Zugfahrzeug mit einem Retarder ausgerüstet ist. Die Folge davon ist, dass die Bremswirkung bzw. -Leistung stark und teilweise irreversibel abfällt. Um die gewünschte Bremsleistung zur Verfügung zu stellen, müssen folglich die Bremsbeläge ausgetauscht werden, obwohl die Verschleißgrenze noch nicht erreicht ist. Ebenso problematisch ist, dass die Bremsleistung, die der Fahrzeugauslegung zugrunde gelegt wurde, im Bedarfsfall nicht zur Verfügung steht. Dies ist insbesondere bei Notbremsungen oder in Verbindung mit Fahrdynamikregelungen oder Fahrer-Assistenzsystemen (aktive Abstandsregelung etc.) problematisch, weil die Steuerung dieser Systeme ebenfalls auf einer ausreichenden Fahrzeugverzögerung und damit Bremsleistung durch die Radbremsen basiert. Seitens der Achs- und Bremssystemhersteller gibt es lediglich Empfehlungen, die Bremssysteme, insbesondere die elektronisch geregelten Bremssysteme (EBS) entsprechend zu parametrieren. Des Weiteren werden die Fahrer angehalten, regelmäßig die Radbremsen zu betätigen. Die Parametrie-Empfehlungen führen in der Praxis aufgrund der unterschiedlichsten Fahrzeugkonfigurationen und teilweise unterschiedlichen gesetzlichen Bestimmungen teilweise zu Problemen. Die regelmäßige Bremsbetätigung durch den Fahrer ist aufgrund des menschlichen Einflusses nicht prozesssicher.

DE 103 20 175 A1 offenbart eine hydraulische Bremsanlage eines Kraftfahrzeugs mit einer Hilfspumpe, mit der ein höherer als der vom Fahrer mit seinem Bremsenbetätigungsorgan, insbesondere Bremspedal, erzeugter Bremsdruck an die Fahrzeug-Radbremszylinder angelegt wird.

DE 102 57 839 A1 offenbart ein Verfahren und eine Vorrichtung sowie ein Computerprodukt beziehungsweise ein Computerprogramm zur Überwachung wenigstens einer Radbremse einer Bremsanlage.

EP 1 832 480 A1 offenbart eine Bremskontrolleinheit, welche eine Bremskraft kontrolliert, die auf ein Rad eines Fahrzeugs aufgebracht wird. Insbesondere wird ein Index berechnet, welcher eine Differenz zwischen einer erwarteten Bremskraft und einer tatsächlichen Bremskraft bestimmt.

DE 101 37 273 A1 betrifft ein Verfahren und eine Vorrichtung zur Unterstützung des Fahrers eines Fahrzeugs, insbesondere eines Kraftfahrzeugs, während einer Bremsung, bei dem ein vom Fahrer angeforderter Bremsdruck ermittelt wird sowie interne, das Fahrzeug antreibende oder bremsende, Momente.

DE 199 11 902 C1 offenbart ein Verfahren, bei dem zur variablen Einstellung der Bremskraft in einer hydraulischen Bremsanlage eines Kraftfahrzeugs ein Bremsdruck erzeugt wird, welcher eine Radbremseinrichtung beaufschlagt. Um eine nachlassende Bremswirkung in hydraulischen Bremsanlagen in weiten Bereichen zu kompensieren, wird der tatsächliche Ist-Wert zwischen Bremsscheibe und Bremsbelag mindestens einer Radbremse ermittelt und mit einem vorgegebenen Soll-Reibwert verglichen.

Die GB 2 363 436 A betrifft ein Verfahren zum Überwachen der Dicke des Bremsbelags oder der Bremsscheibe, wobei Parameter wie Betätigungszeit, Betätigungsdruck, Relativgeschwindigkeit und Temperatur zur Erstellung eines Abnutzungsmodells berücksichtigt werden.

Es ist also Aufgabe der vorliegenden Erfindung, ein Verfahren zur Sicherstellung der Bremswirkung einer Bremse, insbesondere eines Nutzfahrzeugs, im Fahrbetrieb bereitzustellen, das das Reibwertniveau von Reibpaarungen, insbesondere von Bremsbelägen, über die gesamte Lebensdauer der Reibpartner auf einem Mindestniveau hält und durch das ein sogenanntes "Einschlafen" oder "Verglasen" der Bremsbeläge vermieden wird.

Diese Aufgabe wird gelöst durch ein Verfahren gemäß Anspruch 1. Weitere Vorteile und Merkmale der Erfindung ergeben sich aus den Unteransprüchen sowie der Beschreibung und den beigefügten Figuren.

Erfindungsgemäß umfasst ein Verfahren zur Sicherstellung der Bremswirkung einer Bremse, insbesondere eines Nutzfahrzeugs, im Fahrbetrieb, wobei die Bremse zumindest eine Bremsfläche und zumindest einen eine Reibfläche umfassenden Bremsbelag aufweist, wobei sich die Bremswirkung zwischen der Bremsfläche und der Reibfläche durch einen dort wirkenden Bremsdruck entfaltet, die Schritte:
- Erfassen der Bremswirkung der Bremse;
- Zuordnen der Bremswirkung einem Reibkennwert der Reibfläche in einer Berechnungseinheit;
- Gegenüberstellen des Reibkennwerts einer Grenz-Bremswirkung in einem Komparator, wobei bei Unterschreiten der Grenz-Bremswirkung ein Signal an die Bremse ausgegeben wird, welches mittelbar und/oder unmittelbar durch einen Druckaufbau einen Bremsdruck und eine Reibkraft zwischen der Bremsfläche und der Reibfläche bewirkt, wodurch der Reibkennwert der Reibfläche über die Grenz-Bremswirkung gebracht wird, dadurch, dass der Bremsdruck und die Reibkraft an der Reibfläche und/oder der Bremsfläche einen Materialabtrag und/oder einen Wärmeeintrag erwirken, wodurch das Verhältnis von Bremswirkung zu Bremsdruck steigerbar ist.

Durch das Verfahren kann also bei gleichem Bremsdruck die Bremswirkung wieder erhöht werden. Bei den Bremsen handelt es sich vorzugsweise um Scheiben- und/oder Trommelbremsen. Bevorzugt sind ein oder mehrere Bremsen, innerhalb eines Bremssystems zusammengefasst. Bevorzugt besteht das Bremssystem aus einer Kombination von Scheibenbremsen und/oder Trommelbremsen oder allgemein aus unterschiedlichen Bremsentypen. Weiterhin bevorzugt ist innerhalb eines Bremssystems auch nur ein einziger Bremsentyp verbaut. Die unterschiedlichen Anwendungs- und Ausführungsformen machen auch deutlich, dass es nicht entscheidend ist, dass die Bremsfläche und/oder die Reibfläche flach ausgebildet sind, wie dies beispielsweise bei einer Scheibenbremse der Fall ist. Ebenso bevorzugt können die Bremsfläche und/oder die Reibfläche bogenförmig gekrümmt, wie zum Beispiel bei einer Trommelbremse, ausgeführt sein. Weiterhin bevorzugt ist die Bremse Teil eines elektronisch geregelten Bremssystems (EBS). Zweckmäßigerweise liegt der Erfassung der Bremswirkung oder auch der Bremsleistung der Bremse die Idee zugrunde, dass die heute schon erfassbaren Daten eines elektronischen Bremssystems, insbesondere die Fahrzeugverzögerung in Abhängigkeit des Bremsdrucks, gegebenenfalls auch der Zylinderhub und die geometrischen Parameter aus der Bremsberechnung dazu genutzt werden, um das Reibwertniveau der Reibpaarung, mit anderen Worten also die Bremswirkung der Bremse, indirekt zu bestimmen und die Tendenz eines Reibwertabfalls über der Zeit frühzeitig zu erkennen. Die Häufigkeit der Bremsungen und das Druckniveau der Bremsungen können ebenfalls als Kriterien herangezogen werden, das Verfahren zur Sicherstellung der Bremswirkung einzuleiten, mit anderen Worten also ein automatisches Aktivierungsprogramm für die Bremsbeläge zu starten. Bevorzugt beschränkt sich das Zuordnen der Bremswirkung zu dem Reibkennwert der Reibfläche in einer Berechnungseinheit nicht nur auf die Reibfläche. Der Reibkennwert spiegelt vielmehr das Zusammenwirken der Reibfläche(n) mit der oder den Bremsflächen wieder. Der Reibkennwert erfasst damit Eigenschaften der Reibpaarung. Weiterhin bevorzugt hält die Berechnungseinheit zumindest eine Speichereinheit vor, mit welcher das Speichern von Daten, beispielsweise von Reibkennwerten, besonders bevorzugt auch über der Zeit möglich ist. Ebenfalls bevorzugt werden auch Fahrprofile und die weiter oben genannten erfassbaren Daten des (elektronischen) Bremssystems etc. gespeichert. Hintergrund ist, dass die Berechnungseinheit dadurch in der Lage ist, Tendenzen für einen Reibwertabfall zu entwickeln, mit anderen Worten also vorauszuberechnen. Dieses geschieht durch die Verarbeitung der gespeicherten Daten sowie den Daten des (elektronischen) Bremssystems, vorzugsweise in Echtzeit, beispielsweise über Sensoren etc. Besonders vorteilhaft ist es, wenn bereits im Fahrzeug bestehende bzw. vorhandene Sensoren nutzbar sind und nicht extra für das Verfahren zur Sicherstellung der Bremswirkung neue Sensoren verbaut werden. Bevorzugt stellt die Grenzbremswirkung einen Wert, mit anderen Worten einen Reibkennwert dar, der vorteilhafterweise nicht unterschritten werden sollte. Es versteht sich, dass es von Vorteil sein kann, eine Vielzahl derartiger Grenz-Bremswirkungen vorzuhalten. So kann die Grenz-Bremswirkung vom Alter der Reibfläche und/oder der Bremsfläche, der verwendeten Materialien, vom Fahrprofil, vom Einsatzgebiet des Fahrzeugs (Heißland, Kaltland, Berücksichtigung geodätischer Parameter wie der Höhe) und dergleichen beeinflusst werden. Bevorzugt werden auch Grenz-Bremswirkungen in unterschiedlichen Stufen vorgehalten. So können die Stufen beispielsweise unkritische bis sehr kritische Zustände abdecken. Weiterhin bevorzugt ist auch die Vorgabe eines Grenz-Bremswirkungsbereichs, innerhalb dessen ein sicherer Betrieb der Bremse gewährleistbar ist. Mit anderen Worten können also Rückfallebenen vorgesehen werden bzw. auch ein Endwert, der keinesfalls unterschritten werden darf. Bevorzugt ist das Signal, das an die Bremse ausgegeben wird, ein Steuergerätesignal. Dies bedeutet letztendlich, dass das Verfahren zur Sicherstellung der Bremswirkung einer Bremse bevorzugt innerhalb eines Steuergeräts eines Fahrzeugs, beispielsweise eines Motorsteuergeräts oder eines Bremsensteuergeräts, implementierbar ist. Dabei ist es unerheblich, ob das Verfahren als einzelnes Modul zur Verfügung gestellt und dann eingebaut wird, oder ob es direkt in vorhandene Strukturen integriert wird. Die unmittelbare Weiterleitung des Signals kann derart ausgeführt sein, dass das Signal sozusagen direkt an eine Bremse weitergeleitet und dort weiter verarbeitbar ist. Demgegenüber könnte die mittelbare Weiterleitung derart ausgeführt sein, dass das Signal in einem Bremsensteuergerät aufbereitet und von dort erst an die Bremse geführt wird etc. Von großem Vorteil ist es, wenn dieses Verfahren selbständig, mit anderen Worten also automatisch, abläuft. Weder sollte der Fahrer den Druckaufbau initiieren, noch wahrnehmen. Nichtsdestotrotz kann es von Vorteil sein, ein Warnsignal zu erzeugen, welches dem Fahrer den Verschleißzustand der Bremse anzeigt. Bevorzugt erfolgt der Druckaufbau, welcher durch den Bremsdruck die Reibkraft zwischen der Bremsfläche und der Reibfläche bewirkt, durch den Aufbau eines Öl- oder Luftdrucks. Bevorzugt werden also hydraulische oder pneumatische Bremssysteme eingesetzt. Das Verfahren ist allerdings nicht auf derartige Systeme begrenzt, sondern kann auch auf Systeme angewandt werden, die beispielsweise mit einem Seilzug betätigt werden. Der Materialabtrag findet bevorzugt auf der Reibfläche des Bremsbelags statt, da dieser in der Regel weicher ist. Der Materialabtrag kann auch vorteilhaft auf der Bremsfläche stattfinden, um beispielsweise Flugrost zu entfernen oder auch sonstige Partikel, die sich auf der Bremsfläche befinden bzw. sich dort eingebrannt haben. Ebenfalls bevorzugt wird sowohl von der Reibfläche als auch von der Bremsfläche Material abgetragen. Bevorzugt wird der Materialabtrag auf der Reibfläche derart ausgeführt, dass die "eingeschlafene" bzw. "verglaste" Schicht mittels der Reibkraft abgetragen, also entfernt, oder auch abgeschliffen wird. Zweckmäßigerweise wird durch diesen Materialabtrag sozusagen frisches Reibflächen-Material freigelegt. Abhängig vom Material der Reibfläche bzw. des Bremsbelags kann auch der durch die Reibkraft und den Bremsdruck entstehende Wärmeeintrag dazu genutzt werden, die innere Struktur des Bremsbelags, bis hinein in die Molekülebene, derart zu verändern, dass der Reibkennwert und damit das Verhältnis von Bremswirkung zu Bremsdruck steigt. So ist es beispielsweise vorteilhaft, wenn durch den Wärmeeintrag der Bremsbelag bzw. dessen Reibfläche wieder weicher wird, da sich dadurch der Reibkennwert (der Reibfläche) erhöhen dürfte.

Vorteilhafterweise umfasst das Verfahren zusätzlich den Schritt:
- Bereitstellen eines Grenzgeschwindigkeitswerts eines Fahrzeugs und Regelung des Druckaufbaus derart, dass trotz des zwischen der Bremsfläche und der Reibfläche wirkenden Bremsdrucks die Ist-Geschwindigkeit des Fahrzeugs nicht unter den Grenzgeschwindigkeitswert absinkt.
Bevorzugt wird also ein Bremseingriff derart ausgeführt, dass der Fahrer von diesem Bremseingriff nichts merkt. Zweckmäßigerweise wird hierzu beispielsweise ein Geschwindigkeitssignal des Fahrzeugs oder ein Rotationsgeschwindigkeitssignal der Bremsscheibe ausgewertet bzw. ausgelesen und mit einem Grenzgeschwindigkeitswert, zum Beispiel der Fahrgeschwindigkeit des Fahrzeugs oder der Rotationsgeschwindigkeit der Bremsscheibe, verglichen. Je nach Anwendungsbereich des Fahrzeugs bzw. dessen Einsatzprofil können unterschiedliche Grenzgeschwindigkeitswerte festgelegt werden. Von Vorteil kann es auch sein, einen gewissen Bereich für einen Grenzgeschwindigkeitswert festzulegen, der bei der Betätigung der Bremse nicht unterschritten werden darf bzw. innerhalb dessen ein komfortabler Betrieb möglich ist. Ziel ist es, diesen Grenzgeschwindigkeitswert derart zu gestalten bzw. abzustimmen, dass verschiedenste Fahrer mit verschiedensten Komfortempfindungen durch das Verfahren zur Sicherstellung der Bremswirkung in ihrem Komfortempfinden nicht negativ beeinflusst werden. So kann beispielsweise eine kontinuierliche Anwendung des Verfahrens zur Sicherstellung der Bremswirkung ermöglichen, dass nur ein geringer Bremsdruck nötig ist, um das "Einschlafen" und "Verglasen" der Bremsflächen entsprechend zu behindern. Vorteilhafterweise kann das Verfahren zur Sicherstellung der Bremswirkung auch derart äußerst komfortbetont für einen Fahrer ausgeführt werden, in dem beispielsweise nur ein Bremsbelag angelegt wird. Um dennoch mit diesem Bremsbelag einen ausreichend hohen Bremsdruck zu erzeugen, könnte auf der gegenüberliegenden Seite, also an der Seite, an der eigentlich der andere Bremsbelag wirken würde, ein Gegenhalter, beispielsweise bestehend aus einer Rolle, angebracht sein. Bevorzugt wäre diese Ausführungsform bei einer Scheibenbremse anwendbar.

Vorteilhafterweise wird das Absinken der Ist-Geschwindigkeit des Fahrzeugs unter den Grenzgeschwindigkeitswert durch eine Lastaufschaltung eines Hauptantriebsmotors, insbesondere eines Verbrennungsmotors, verhindert. Damit wird bevorzugt eine Regelung, auch bekannt als Drehmomentenregelung, übernommen, wie sie in ähnlicher Weise aus dem Betrieb einer Klimaanlage in Kombination mit einem Verbrennungsmotor bekannt ist. Das für den Antrieb des Klimakompressors notwendige Drehmoment - im vorliegenden Fall also das Drehmoment zur Kompensation des Bremsdrucks - wird derart selbständig vom Verbrennungsmotor durch eine entsprechende Drehmomenterhöhung bereitgestellt, dass ein Fahrer beim Einschalten der Klimaanlage keine Verzögerung der Fahrgeschwindigkeit erfährt. Übertragen auf das Verfahren zur Sicherstellung der Bremswirkung bedeutet dies, dass für einen Fahrer die Betätigung der Bremse nicht wahrnehmbar ist, da der Verbrennungsmotor ein zusätzliches Drehmoment aufbringt, welches die Bremskraft kompensiert. Vorteilhafterweise kann die Lastaufschaltung des Verbrennungsmotors bzw. dessen Drehmomenterhöhung auch in Kombination mit anderen Aspekten, besonders in Bezug auf den Verbrennungsmotor, genutzt werden. So kann durch die Erhöhung der Last des Verbrennungsmotors dessen spezifischer Wirkungsgrad erhöht werden. Vorteilhaft kann es auch sein, Strategien zur Abgasnachbehandlung, wie beispielsweise das Freibrennen des Rußpartikelfilters bei einem Dieselmotor, welche oft ebenfalls mit einer Lastaufschaltung verbunden ist, in Kombination mit der Erhöhung des Bremsdrucks auszuführen.

Weiterhin bevorzugt wird eine Zusatzeinheit, insbesondere ein elektrischer, hydrostatischer, pneumatischer und/oder hydraulischer Motor verwendet, um das Absinken der Ist-Geschwindigkeit des Fahrzeugs unter den Grenzgeschwindigkeitswert zu verhindern. Mit anderen Worten kann also der Zusatzmotor eines Hybridfahrzeugs genutzt werden, um durch eine Lastaufschaltung bzw. eine Drehmomenterhöhung einem an den Bremsbelägen bzw. Bremsflächen wirkenden Bremsdruck entgegenzuwirken und so ein Absenken der Fahrgeschwindigkeit während der Ausführung des Verfahrens zur Sicherstellung der Bremswirkung zu verhindern. Vorteilhafterweise wird ein derartiger Eingriff in Kombination bzw. unter Berücksichtigung des Batteriemanagements des Fahrzeugs ausgeführt.

Erfindungsgemäß umfasst das Verfahren weiterhin den Schritt:
- Verarbeiten von Zusatzdaten für die Bestimmung und Ausgabe des Signals, wobei diese aus hinterlegten Streckenprofilen und/oder Vorausschaudaten erzeugt sind, nämlich GPS-Daten.
Von Vorteil kann es sein, den Höhenverlauf einer Strecke zu kennen und innerhalb der Berechnungseinheit für die Bestimmung und Ausgabe des Signals zu verarbeiten und zu benutzen. So kann beispielsweise bei Strecken mit viel Gefälle das Verfahren zur Sicherstellung der Bremswirkung optimal genutzt werden, beispielsweise indem bewusst ein Retarder umgangen wird und/oder die Bremsen betätigt werden, die sonst weniger im Einsatz sind, also eher zu einer Tendenz neigen einzuschlafen oder zu verglasen, beispielsweise die Bremsen der hinteren Achsen. Weiterhin bevorzugt sind fahrerspezifische Nutzerdaten abgelegt. So kann das Verfahren bei einem Fahrer, von dem bekannt ist, dass er sehr wenig bremst, beispielsweise weil er sehr oft die Motorbremse verwendet, entsprechend parametriert sein. Bevorzugt ist das Verfahren mit einer Selbstlern-Funktion ausgestattet, die das Fahrerverhalten erkennt und das Verfahren zur Sicherstellung der Bremswirkung entsprechend anpasst. Von Vorteil kann es auch sein, zu berücksichtigen, ob das Fahrzeug in Heiß- oder in Kaltgebieten eingesetzt wird. Ähnliches gilt für den Streckenzustand. So kann es beispielsweise von Vorteil sein, das Verfahren nicht auszuführen, wenn gerade ein sehr staubiges Gebiet durchfahren wird oder wenn bekannt ist, dass im Anschluss an den Druckaufbau und dem daraus folgenden Materialabtrag und dem Wärmeeintrag ein sehr staubiges Gebiet befahren wird. Staubpartikel könnten sich dann umso leichter an den Reibflächen absetzen bzw. anhaften, wenn diese sozusagen frisch aufbereitet sind.

Zweckmäßigerweise umfasst das Verfahren zusätzlich den Schritt:
- Gestalten des Druckaufbaus abhängig vom Material der Reibfläche und/oder der Bremsfläche.
So kann bei unterschiedlich weichen Bremsbelägen bzw. dessen Reibflächen auch ein unterschiedlicher Druckaufbau nötig sein, um einen ausreichenden Materialabtrag und/oder Wärmeeintrag zu erwirken, welcher ein "Verglasen" bzw. "Einschlafen" der Bremsen bzw. Bremsbeläge verhindert. Möglich kann es auch sein, dass bestimmte Bremsbeläge mehr zum Einschlafen oder Verglasen neigen als andere. Bevorzugterweise wird dieses von dem Verfahren berücksichtigt, beispielsweise indem Bremsbelag-spezifische und/oder auch Bremsflächenspezifische Daten für das Verfahren berücksichtigt und verarbeitet werden, beispielsweise in der Berechnungseinheit. Wird nach einem Bremsbelag-Wechsel ein anderer Typ eines Bremsbelags eingebaut, wird dies vorteilhafterweise, beispielsweise über ein Bedienfeld im Fahrzeug (bzw. im Steuergerät) eingegeben und kann so weiterverarbeitet werden. Mit Vorteil kann die Identifizierung des neuen Bremsbelags auch automatisch über einen RFID-Chip erfolgen, der in und/oder an dem neu eingebauten Bremsbelag integriert ist.

Weiterhin bevorzugt umfasst das Verfahren den Schritt:
- Simulieren des Verhaltens der Bremse über ein Simulationsmodell in der Berechnungseinheit.
Zweckmäßigerweise sind in dem Simulationsmodell der Bremse Teile des Bremssystems oder das komplette Bremssystem bzw. die verschiedenen Komponenten des Bremssystems abgebildet, beispielsweise über ein oder mehrer physikalische Modelle, Kennfelder und/oder Kennlinien etc. Mit anderen Worten kann also der Druckaufbau und der daraus resultierende Bremsdruck zusammen mit seinen Auswirkungen vorausberechnet werden, da in dem Simulationsmodell eine Bremse mit einer Bremsfläche und zumindest einem eine Reibfläche umfassenden Bremsbelag vorhanden ist. Bevorzugt kann ein derartiges Simulationsmodell für Lebensdauer-Vorausberechnungen der Bremse und seiner Komponenten genutzt werden. Bevorzugt ist ein derartiges Simulationsmodell derart implementiert, dass es wenig Speicherplatz benötigt. Damit kann es leicht in vorhandene Steuergeräte implementiert werden, wie sie derzeit in Fahrzeugen, insbesondere in Nutzfahrzeugen, verwendet werden. Bevorzugt sind auch rein mathematische Modelle als Simulationsmodelle einsetzbar, beispielsweise zumindest ein Polynommodell und/oder zumindest eine neuronales Netz. Derartige mathematische Modelle könnten bevorzugt über die erfassbaren Daten des Bremssystems trainiert werden. Bevorzugt sind auch Kennlinien, Kennfelder, mathematische und/oder physikalische Modelle kombinierbar.

Weiterhin bevorzugt umfasst das Verfahren den Schritt:
- Zuordnen eines Reibkennwerts der Bremsfläche in der Berechnungseinheit, welcher über den Materialabtrag und/oder den Wärmeeintrag derart beeinflussbar ist, dass das Verhältnis von Bremswirkung zu Bremsdruck steigerbar ist.
Mit anderen Worten ist also der Bremsfläche beispielsweise einer Scheibenbremse in gleicher Weise ein Reibkennwert zuordenbar, wie beispielsweise der Reibfläche eines Bremsbelags. Mit anderen Worten sind also die genannten Vorteile, welche vorab genannt wurden, auch speziell auf die Bremsfläche anwendbar. Die Bremsfläche besteht in der Regel aus einem Metall, so dass hier andere Drücke notwendig sein können, um deren Reibkennwert zu beeinflussen.

Weiterhin bevorzugt umfasst das Verfahren den Schritt:
- Weiterverarbeiten des Signals in ein für einen Fahrer wahrnehmbares akustisches, haptisches und/oder optisches Warnsignal.
Von Vorteil kann es dabei sein, dass der Fahrer durch ein derartiges Warnsignal darauf aufmerksam gemacht wird, dass bald ein Bremsbelagwechsel oder dergleichen bevorsteht. Ebenfalls bevorzugt werden derartige Warnsignale im Steuergerät des Fahrzeugs abgespeichert, von wo aus sie weiterverarbeitbar sind oder zu einem späteren Zeitpunkt ausgelesen werden können. Bevorzugt kann es auch sein, dass das Verfahren zur Sicherstellung der Bremswirkung auch aktiv ausgeführt wird, wenn der Fahrer bzw. Benutzer dies wünscht, beispielsweise über die Betätigung eines Schalters.

Weitere Vorteile und Merkmale ergeben sich aus der nachfolgenden Beschreibung einer bevorzugten Ausführungsform und einer bevorzugten Verfahrensvariante des erfindungsgemäßen Verfahrens zur Sicherstellung der Bremswirkung einer Bremse mit Bezug auf die beigefügten Figuren. Einzelne Merkmale der Ausführungsform und der Verfahrensvariante können dabei im Rahmen der Erfindung miteinander kombiniert werden.

Es zeigen:
- Figur 1: einen Überblick über verschiedene Komponenten einer bevorzugten Ausführungsform des Verfahrens zur Sicherstellung der Bremswirkung;
- Figur 2: eine bevorzugte Verfahrensvariante des Verfahrens zur Sicherstellung der Bremswirkung.

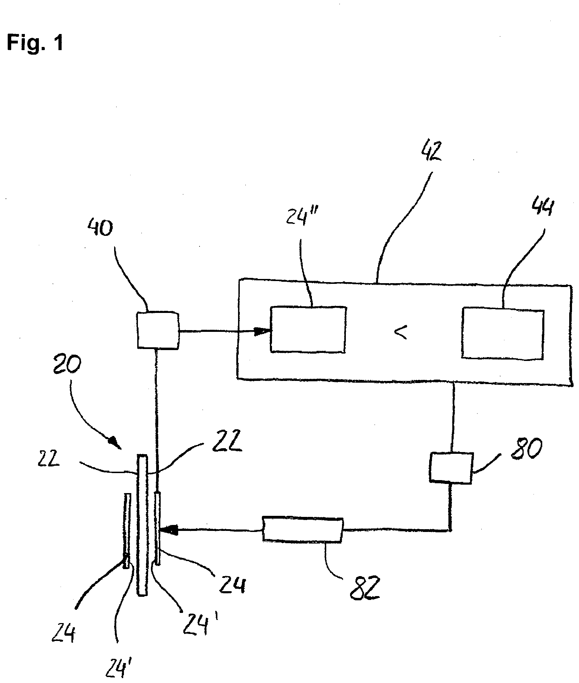

Fig. 1 zeigt einen Überblick über verschiedene Komponenten einer bevorzugten Ausführungsform des Verfahrens zur Sicherstellung der Bremswirkung. Skizziert ist eine Bremse 20, welche zwei Bremsflächen 22 umfasst. Zu den beiden Bremsflächen 22 zugewandt angeordnet sind zwei Bremsbeläge 24, welche jeweils zumindest eine Reibfläche 24' aufweisen. In der in Fig. 1 dargestellten bevorzugten Ausführungsform verschiedener Komponenten zum Durchführen des Verfahrens zur Sicherstellung der Bremswirkung verdeutlicht die Verbindung des Bremsbelags 24 zur Berechnungseinheit 40 das Erfassen der Bremswirkung der Bremse. In der Berechnungseinheit 40 findet die Zuordnung der Bremswirkung zu einem Reibkennwert 24" statt. Im Komparator 42 wird untersucht bzw. verglichen, ob der Reibkennwert 24" kleiner als eine Grenz-Bremswirkung 44 ist. Abhängig davon wird ein Signal 80 ausgegeben, welches in einem Druckaufbau 82 resultiert. Dieser Druckaufbau 82 wirkt auf die Bremse 20 bzw. auf die Bremsbeläge 24 und führt zu einem Reibkraftaufbau bzw. einem Bremsdruckaufbau zwischen den Bremsflächen 22 und den Reibflächen 24'. Es versteht sich, dass die Bremse 20 Teil eines Fahrzeugs ist und als solches die Bremsflächen 22 mit einem Rad verbunden sind, worüber die Bremskraft letztendlich auf eine Fahrbahn übertragbar ist.

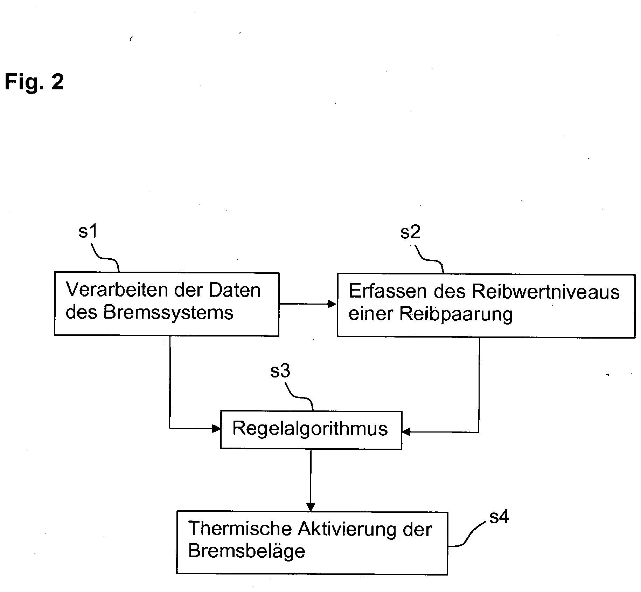

Fig. 2 zeigt eine bevorzugte Verfahrensvariante des Verfahrens zur Sicherstellung der Bremswirkung. Schritt s1 schließt das Verarbeiten der Daten des Bremssystems ein. Hierbei besteht die Idee darin, dass die heute schon erfassten Daten eines Bremssystems, insbesondere eines elektronischen Bremssystems, wie beispielsweise die Fahrzeugverzögerung in Abhängigkeit des Bremsdrucks, gegebenenfalls auch der Zylinderhub und die geometrischen Parameter aus der Bremsberechnung dazu genutzt werden, um das Reibwertniveau indirekt zu bestimmen und die Tendenz eines Reibwertabfalls über die Zeit frühzeitig zu erkennen. Damit ist der Schritt s2, nämlich das Erfassen des Reibwertniveaus der Reibpaarung, möglich. Der Schritt s1 muss dabei nicht zwangsläufig dem Schritt s2 vorangestellt sein. So kann das Erfassen des Reibwertniveaus der Reibpaarung auch direkt aus im Fahrzeug verbauten Sensorwerten erfolgen, die nicht zwangsläufig einer (Weiter-) Verarbeitung bedürfen. Ebenso können Daten, welche im Schritt s1 generiert werden, direkt im Schritt s3, also im Regelalgorithmus, weiterverwendet werden. So können beispielsweise die Daten einer Verschleißerfassung der Bremsbeläge und die Erfassung der zurückgelegten Strecke sowie des bisherigen Beanspruchungsprofils sehr gut für eine Abschätzung der Restbelaglebensdauer verwendet und im Regelalgorithmus weiterverarbeitet werden. Letztendlich dient die Detektierung des Reibwertabfalls dazu, um über einen entsprechenden Regelalgorithmus (vgl. s3), der im Bremssystem hinterlegt ist, automatisch (ohne Fahrereinfluss) durch ein gezieltes leichtes Abbremsen einzelner Bremsen oder Achsen die Bremsbeläge thermisch wieder zu aktivieren und das Reibwertniveau nicht unter eine definierte Grenze abfallen zu lassen. Die Häufigkeit der Bremsungen und das Druckniveau der Bremsungen können ebenfalls als Kriterien herangezogen werden, um ein automatisches Aktivierungsprogramm für die Bremsbeläge zu starten (s4). Damit kann auch sichergestellt werden, dass Sicherheits- oder Assistenzsysteme, die auf die Radbremse zugreifen, im optimalen Bereich arbeiten können. Sollte das Reibwertniveau dauerhaft unter die definierte Grenze absinken, könnte über einen Warnhinweis an den Fahrer und eine eventuelle Abschaltung der Assistenzsysteme (inklusive Bestätigung durch den Fahrer) vermieden werden, dass der Fahrer unbewusst in eine Situation gerät, in der er sich auf einwandfreie Funktion der Systeme verlässt bzw. diese voraussetzt, obwohl sie nicht mehr gewährleistet ist.

### Bezugszeichenliste

- 20: Bremse
- 22: Bremsfläche
- 24: Bremsbelag
- 24': Reibfläche
- 24": Reibkennwert
- 40: Berechnungseinheit
- 42: Komparator
- 44: Grenz-Bremswirkung
- 80: Signal
- 82: Druckaufbau
- s1-s4: Verfahrensschritte

## Patentansprüche

1. Verfahren zur Sicherstellung der Bremswirkung einer Bremse (20), insbesondere eines Nutzfahrzeugs, im Fahrbetrieb,
wobei die Bremse (20) zumindest eine Bremsfläche (22) und zumindest einen eine Reibfläche (24') umfassenden Bremsbelag (24) umfasst,
wobei sich die Bremswirkung zwischen der Bremsfläche (22) und der Reibfläche (24') durch einen dort wirkenden Bremsdruck entfaltet, umfassend die Schritte:
- Erfassen der Bremswirkung der Bremse (20);
- Zuordnen der Bremswirkung einem Reibkennwert (24") der Reibfläche (24') in einer Berechnungseinheit (40), wobei die Berechnungseinheit (40) eine Tendenz für einen Reibwertabfall vorausberechnet;
- Gegenüberstellen des Reibkennwerts (24") einer Grenz-Bremswirkung (44) in einem Komparator (42), wobei bei Unterschreiten der Grenz-Bremswirkung (44) ein Signal (80) an die Bremse (20) ausgegeben wird, welches mittelbar und/oder unmittelbar durch einen Druckaufbau (82) einen Bremsdruck und eine Reibkraft zwischen der Bremsfläche (22) und der Reibfläche (24') bewirkt, wodurch der Reibkennwert (24") der Reibfläche (24') über die Grenz-Bremswirkung (44) gebracht wird, dadurch dass der Bremsdruck und die Reibkraft an der Reibfläche (24') und/oder der Bremsfläche (22) einen Materialabtrag und/oder einen Wärmeeintrag erwirken, wodurch das Verhältnis von Bremswirkung zu Bremsdruck steigerbar ist,
- Verarbeiten von Zusatzdaten für die Bestimmung und Ausgabe des Signals (80), wobei diese aus hinterlegten GPS-Streckenprofildaten und/oder Vorausschau-GPS-Daten erzeugt sind.

2. Verfahren nach Anspruch 1, zusätzlich umfassend den Schritt:
- Bereitstellen eines Grenz-Geschwindigkeitswerts eines Fahrzeugs und Regelung des Druckaufbaus (82) derart, dass trotz des zwischen der Bremsfläche (22) und der Reibfläche (24') wirkenden Bremsdrucks die Ist-Geschwindigkeit des Fahrzeugs nicht unter den Grenz-Geschwindigkeitswert absinkt.

3. Verfahren nach Anspruch 2,
wobei das Absinken der Ist-Geschwindigkeit des Fahrzeugs unter den Grenz-Geschwindigkeitswert durch eine Lastaufschaltung eines Hauptantriebsmotors, insbesondere eines Verbrennungsmotors, verhindert wird.

4. Verfahren nach Anspruch 2 oder 3,
wobei eine Zusatzeinheit, insbesondere ein elektrischer, hydrostatischer, pneumatischer und/oder hydraulischer Motor verwendet wird, um das Absinken der Ist-Geschwindigkeit des Fahrzeugs unter den Grenz-Geschwindigkeitswert zu verhindern.

5. Verfahren nach einem der vorhergehenden Ansprüche, zusätzlich umfassend den Schritt:
- Gestalten des Druckaufbaus (82) abhängig vom Material der Reibfläche (24') und/oder der Bremsfläche (22).

6. Verfahren nach einem der vorhergehenden Ansprüche, weiterhin umfassend den Schritt:
- Simulieren des Verhaltens der Bremse (20) über ein Simulationsmodell in der Berechnungseinheit (40).

7. Verfahren nach einem der vorhergehenden Ansprüche, weiterhin umfassend den Schritt:
- Zuordnen eines Reibkennwerts (22") der Bremsfläche (22) in der Berechnungseinheit (40), welcher über den Materialabtrag und/oder den Wärmeeintrag derart beeinflussbar ist, dass das Verhältnis von Bremswirkung zu Bremsdruck steigerbar ist.

8. Verfahren nach einem der vorhergehenden Ansprüche, weiterhin umfassend den Schritt:
- Weiterverarbeiten des Signals (80) in ein für einen Fahrer wahrnehmbares akustisches, haptisches und/oder optisches Warnsignal.

9. Verfahren nach einem der Ansprüche 2-8,
wobei je nach Anwendungsbereich des Fahrzeugs bzw. dessen Einsatzprofil unterschiedlichen Grenz-Geschwindigkeitswerte festlegbar sind.

10. Verfahren nach einem der vorhergehenden Ansprüche,
wobei das Verfahren mit einer Selbstlern-Funktion ausgestattet ist, die das Fahrerverhalten erkennt und das Verfahren zur Sicherstellung der Bremswirkung entsprechend anpasst.

11. Verfahren nach einem der vorhergehenden Ansprüche,
wobei der Fahrer den Druckaufbau (82) nicht initiiert.

## Claims

1. A method for securing the braking effect of a brake (20), in particular of a utility vehicle, in driving mode,
wherein the brake (20) comprises at least one brake contact surface (22) and at least one brake pad or brake lining (24) comprising a friction surface (24'),
wherein the braking effect between the brake contact surface (22) and the friction surface (24') unfolds by a braking pressure acting between said brake contact surface (22) and said friction surface (24'), comprising the steps of:
- capturing the braking effect of the brake (20);
- attributing the braking effect to a friction parameter (24") of the friction surface (24') in a calculation unit (40), wherein the calculation unit (40) precalculates a tendency for a drop of the friction coefficient;
- comparing the friction parameter (24") of a marginal braking effect (44) in a comparator (42), wherein a signal (80) is output to the brake (20) when it falls below the marginal braking effect (44), which signal causes a braking pressure and a friction force between the brake contact surface (22) and the friction surface (24') directly and/or indirectly by pressure build-up (82), whereby the friction parameter (24") of the friction surface (24') is brought above the marginal braking effect (44) due to the fact that the braking pressure and the friction force on the friction surface (24') and/or the brake contact surface (22) obtain a material removal and/or a heat input, by which the relation between braking effect and braking pressure can be increased,
- processing additional data for determining and outputting the signal (80),
wherein the data is generated from stored GPS distance profiles and/or GPS preview data.

2. The method of claim 1, additionally comprising the step of:
- providing a marginal speed value of a vehicle and regulating the pressure build-up (82) such that, despite the braking pressure acting between the brake contact surface (22) and the friction surface (24'), the actual speed of the vehicle will not fall below the marginal speed value.

3. The method of claim 2,
wherein the drop of the actual speed of the vehicle below the marginal speed value is prevented by a dynamic load response of a main driving engine, in particular a combustion engine.

4. The method of claim 2 or 3,
wherein an additional unit, in particular an electric, hydrostatic, pneumatic and/or hydraulic motor is used in order to prevent that the actual speed of the vehicle falls below the marginal speed value.

5. The method of any one of the preceding claims, additionally comprising the step of:
- designing the pressure build-up (82) depending on the material of the friction surface (24') and/or of the brake contact surface (22).

6. The method of any one of the preceding claims, further comprising the step of:
- simulating the behavior of the brake (20) by means of a simulation model in the calculation unit (40).

7. The method of any one of the preceding claims, further comprising the step of:
- attributing a friction parameter (22") to the brake contact surface (22) in the calculation unit (40), which parameter can be influenced by the material removal and/or the heat input such that the relation between braking effect and braking pressure can be increased.

8. The method of any one of the preceding claims, further comprising the step of:
- further processing the signal (80) to an acoustic, haptic and/or optical alarm signal, which is discernible by the driver.

9. The method of any one of claims 2-8,
wherein, depending on the field of use of the vehicle or the operational profile thereof, different marginal speed values can be fixed.

10. The method of any one of the preceding claims,
wherein the method is provided with a self-learning unit recognizing the driver's behavior and accordingly adapting the method for securing the braking effect.

11. The method of any one of the preceding claims, wherein the driver does not initiate the pressure build-up (82).

## Revendications

1. Procédé pour garantir l'effet de freinage d'un frein (20), en particulier d'un véhicule utilitaire, pendant le fonctionnement,
le frein (20) comprenant au moins une surface de frein (22) et au moins une plaquette de frein (24) pourvue d'une surface de friction (24'),
l'effet de freinage se développant entre la surface de frein (22) et la surface de friction (24') par une pression de freinage agissant ici,
comprenant les étapes suivantes :
- on détecte l'effet de freinage du frein (20) ;
- on associe l'effet de freinage à un coefficient de friction (24") de la surface de friction (24') dans une unité de calcul (40), l'unité de calcul (40) calculant au préalable une tendance pour une chute du coefficient de friction ;
- on compare le coefficient de friction (24") à un effet de freinage limite (44) dans un comparateur (42), et lors du passage au-dessous de l'effet de freinage limite (44), on émet un signal (80) au frein (20) qui provoque indirectement et/ou directement par l'établissement d'une pression (82) une pression de freinage et une force de friction entre la surface de frein (22) et la surface de friction (24'), ce qui fait augmenter le coefficient de friction (24") de la surface de friction (24') au-dessus de l'effet de freinage limite (44), du fait que la pression de freinage et la force de friction sur la surface de friction (24') et/ou la surface de frein (22) provoquent un enlèvement de matériau et/ou un apport de chaleur, suite à quoi on peut augmenter la relation de l'effet de freinage par rapport à la pression de freinage,
- on traite des données supplémentaires pour déterminer et émettre le signal (80), celles-ci étant générées à partir de données GPS de profils d'itinéraire enregistrés et/ou de données GPS prévisionnelles enregistrées.

2. Procédé selon la revendication 1, comprenant en supplément l'étape suivante :
- on prévoit une valeur de vitesse limite d'un véhicule et on régule l'établissement de pression (82) de telle sorte que malgré la pression de freinage agissant entre la surface de frein (22) et la surface de friction (24'), la vitesse réelle du véhicule ne baisse pas au-dessous de la valeur de vitesse limite.

3. Procédé selon la revendication 2,
dans lequel la baisse de la vitesse réelle du véhicule au-dessous de la valeur de vitesse limite est empêchée par l'application d'une charge d'un moteur d'entraînement principal, en particulier d'un moteur à combustion interne.

4. Procédé selon la revendication 2 ou 3,
dans lequel on utilise une unité supplémentaire, en particulier un moteur électrique, hydrostatique, pneumatique et/ou hydraulique pour empêcher une baisse de la vitesse réelle du véhicule au-dessous de la valeur de vitesse limite.

5. Procédé selon l'une des revendications précédentes, comprenant en outre l'étape suivante :
- on réalise l'établissement de la pression (82) en fonction du matériau de la surface de friction (24') et/ou de la surface de frein (22).

6. Procédé selon l'une des revendications précédentes, comprenant en outre l'étape suivante :
- on simule le comportement du frein (20) au moyen d'un modèle de simulation dans une unité de calcul (40).

7. Procédé selon l'une des revendications précédentes, comprenant en outre l'étape suivante :
- on associe un coefficient de friction (22") à la surface de frein (22) dans l'unité de calcul (40), qui est susceptible d'être influencé par l'enlèvement de matériau et/ou par l'apport de chaleur de telle sorte que la relation de l'effet de freinage par rapport à la pression de freinage peut être augmentée.

8. Procédé selon l'une des revendications précédentes, comprenant en outre l'étape suivante :
- on transforme le signal (80) en un signal d'avertissement acoustique, haptique et/ou optique perceptible pour un conducteur.

9. Procédé selon l'une des revendications 2 à 8,
dans lequel, en fonction du domaine d'application du véhicule ou de son profil d'utilisation, on peut fixer différentes valeurs de vitesse limites.

10. Procédé selon l'une des revendications précédentes,
dans lequel le procédé est équipé d'une fonction d'auto-apprentissage qui reconnaît le comportement du conducteur et qui adapte en correspondance le procédé pour garantir l'effet de freinage.

11. Procédé selon l'une des revendications précédentes,
dans lequel le conducteur n'initialise pas l'établissement de pression (82).
